# EUROPÄISCHE PATENTSCHRIFT

(11) **EP 2 758 695 B1**
(45) Veröffentlichungstag und Bekanntmachung des Hinweises auf die Patenterteilung: **18.11.2015**
(21) Anmeldenummer: 12759680.7
(22) Anmeldetag: 12.09.2012
(51) Int. Cl.: F16K 31/06

(54) **VENTIL MIT EINER VENTILKAMMER UND MEHREREN MAGNETISCHEN BETÄTIGUNGSEINRICHTUNGEN**
VALVE COMPRISING A VALVE CHAMBER AND A PLURALITY OF MAGNETIC ACTUATION DEVICES
SOUPAPE DOTÉE D'UNE CHAMBRE ET DE PLUSIEURS DISPOSITIFS D'ACTIONNEMENT MAGNÉTIQUES

(30) Priorität: 23.09.2011 DE 102011083300
(43) Veröffentlichungstag der Anmeldung: 30.07.2014
(73) Patentinhaber: BSH Hausgeräte GmbH, 81739 München (DE)
(72) Erfinder: EGLMEIER, Hans, 10587 Berlin (DE); HANAU, Andreas, 12359 Berlin (DE); PROPPE, Wolfgang, 13589 Berlin (DE)
(86) Internationale Anmeldenummer: PCT/EP2012/067820
(87) Internationale Veröffentlichungsnummer: WO 2013/041427

(56) Entgegenhaltungen:
- DE-A1- 2 707 663
- JP-A- 60 034 581
- US-A- 1 457 599

## Beschreibung

Die Erfindung betrifft ein Ventil mit zumindest einer Ventilkammer und mehreren magnetischen Betätigungseinrichtungen, wobei mehrere Ventilschließkörper vorgesehen sind, die zusammen in der Ventilkammer angeordnet sind, wobei die Ventilkammer mehrere Ausgänge aufweist und wobei die Anzahl der Ausgänge größer ist als die Anzahl der Ventilschließkörper, welches Ventil sich besonders für wasserführende Haushaltsgeräte eignet, und ein wasserführendes Haushaltsgerät mit solch einem Ventil. Speziell betrifft die Erfindung das Gebiet der wasserführenden Haushaltsgeräte, insbesondere der Waschmaschinen und Waschtrockner.

Ein gattungsgemäßes Ventil geht hervor aus der DE 27 07 663 A1. Aus dieser ist eine Umschaltvorrichtung zum wahlweisen Verbinden einer Medienzuführleitung mit einer von mehreren Abführleitungen bekannt. Bei einer Ausführung dieser Umschaltvorrichtung ist ein Gehäuse mit einem Hohlraum vorgesehen, der in drei um 120° gegeneinander versetzte Teilräume unterteilt ist. Zum Umschalten verdreht man das Gehäuse im drucklosen Zustand um etwa 120°. Dann fällt eine von zwei Kugeln aus einem anfangs unteren Teilraum in einen anfangs oberen Teilraum, der dann seinerseits unten liegt.

Aus der WO 2011/018385 A1 ist ein wasserführendes Hausgerät mit einem Schaltventil bekannt. Das Schaltventil weist einen Ventilraum auf, in den ein mit einer Eingangsleitung verbundener Eingang mündet. Ferner sind ein erster Ausgang mit einer ersten Ventilsitzfläche und ein zweiter Ausgang mit einer zweiten Ventilsitzfläche vorgesehen. Zwei Magnetspulen dienen zum Betätigen eines Ventilschließkörpers des Schaltventils. Der Ventilschließkörper ist dabei in dem Ventilraum angeordnet und wirkt einerseits mit der ersten Ventilsitzfläche und andererseits mit der zweiten Ventilsitzfläche zu einem Dichtsitz zusammen. Eine der Magnetspulen umschließt die erste Ventilsitzfläche umfänglich. Die andere Magnetspule umschließt die zweite Ventilsitzfläche umfänglich. Außerdem weist der Ventilraum eine Mulde auf, die im unbestromten Zustand der Magnetelemente zum Aufnehmen des Ventilschließkörpers dient, wobei die Dichtsitze an den Ventilsitzflächen dann geöffnet sind. Hierdurch kann eine Einspülschale mit drei Kammern gespült werden. Denn in dem Fall, in dem das Wasser über die beiden Ausgänge durch Spülschläuche strömt, treffen die aus den Spülschläuchen austretenden Wasserstrahlen so aufeinander, dass das Wasser in eine mittlere Kammer der Einspülschale gelangt.

Das aus der WO 2011/018385 A1 bekannte wasserführende Hausgerät hat den Nachteil, dass zum Betätigen des einzigen Ventilschließkörpers des Schaltventils, der kugelförmig ausgestattet ist, mit zwei Magnetspulen drei Betriebsmodi entsprechend den drei Kammern der Einspülschale gewährleistet werden müssen. Hierbei besteht das Problem, dass in der mittleren Stellung des kugelförmigen Ventilschließkörpers Wirbel in der Strömung des zugeführten Wassers entstehen, das hierbei beidseitig über die beiden geöffneten Dichtsitze abfließt. Die durch die Aufteilung der Strömung an beiden Seiten des kugelförmigen Ventilschließkörpers entstehenden Wirbel lösen sich abwechselnd. Hierdurch wird der kugelförmige Ventilschließkörper zunächst leicht in Bewegung versetzt und anschließend kommt es zum Aufschaukeln der Bewegung. Hierdurch kann der kugelförmige Ventilschließkörper zu weit aus der erforderlichen Mittelstellung bewegt werden, so dass die Mittelstellung nicht mehr stabil gehalten werden kann. Eine Lösung dieses Problems macht eine entsprechend tiefe Ausgestaltung der Mulde für die Mittelstellung erforderlich, was wiederum starke Magnetspulen erfordert. Dies erhöht die Kosten zur Herstellung des Schaltventils.

Aus der DE 102 49 937A1 ist eine Ventilanordnung mit wenigstens einem Ventil bekannt, das wenigstens zwei verschließbare Öffnungen aufweist. Für den Verschluss der Öffnungen ist ein Bauelement vorgesehen, wobei jede Öffnung zeitlich versetzt zu den anderen Öffnungen mit dem gleichen Bauelement verschließbar ist.

Die Offenlegungsschrift JP 60 034581 zeigt ein Dreiwegeventil.

Die Patentschrift US 1,457,599 zeigt ein Ventil, welches elektrisch betrieben werden kann.

Aufgabe der Erfindung ist es, ein Ventil und ein wasserführendes Haushaltsgerät zu schaffen, die einen verbesserten Aufbau aufweisen. Speziell ist es eine Aufgabe der Erfindung, ein Ventil, das eine zuverlässige Spülung von drei oder mehr Kammern einer Einspülschale ermöglicht, und ein wasserführendes Haushaltsgerät mit solch einem Ventil anzugeben, wobei der Aufwand in Bezug auf den jeweiligen Anwendungsfall optimiert ist. Die Aufgabe wird durch ein Ventil, das insbesondere für wasserführende Haushaltsgeräte dient, und einem wasserführenden Haushaltsgerät gemäß jeweilig entsprechendem unabhängigem Patentanspruch gelöst. Durch die in den abhängigen Patentansprüchen oder nachfolgender Beschreibung aufgeführten oder in beigefügter Zeichnung dargestellten Maßnahmen sind bevorzugte und vorteilhafte Weiterbildungen des erfindungsgemäßen Ventils und des erfindungsgemäßen wasserführenden Haushaltsgeräts möglich.

Die Aufgabe wird durch ein Ventil, das insbesondere für wasserführende Haushaltsgeräte dient, gelöst, wobei zumindest eine Ventilkammer und mehrere magnetische Betätigungseinrichtungen vorgesehen sind, wobei mehrere Ventilschließkörper vorgesehen sind, die zusammen in der Ventilkammer angeordnet sind, wobei die Ventilkammer mehrere Ausgänge aufweist, wobei die Anzahl der Ausgänge größer ist als die Anzahl der Ventilschließkörper und wobei jedem Ausgang eine der magnetischen Betätigungseinrichtungen zugeordnet ist.

Auch wird die Aufgabe durch ein wasserführendes Haushaltsgerät, das insbesondere als Wäschebehandlungsgerät zum Waschen und/oder Trocknen von Wäsche ausgestaltet ist, mit solch einem Ventil gelöst.

In vorteilhafter Weise umfassen die magnetischen Betätigungseinrichtungen jeweils zumindest eine schaltbare Magnetspule. Ferner ist es vorteilhaft, dass die Magnetspule für einen zugeordneten Ausgang den zugeordneten Ausgang umschließt. Dann ist an jedem Ausgang jeweils zumindest eine Magnetspule vorgesehen, wobei die Anzahl der Ausgänge und somit auch die Anzahl der Magnetspulen größer ist als die Anzahl der Ventilschließkörper. Durch Betätigen der gewünschten Magnetspulen an den Ausgängen können diese Ausgänge durch die Ventilschließkörper verschlossen werden. Hierbei bleibt zumindest ein Ausgang frei. Über diesen erfolgt dann beim Zuführen eines Mediums, insbesondere eines Frischwassers, die Weiterleitung des Mediums. Hierdurch ist eine gezielte Wahl des Weges für das Frischwasser oder dergleichen möglich.

Vorteilhaft ist es hierbei auch, dass die Anzahl der Ausgänge um 1 größer ist als die Anzahl der Ventilschließkörper. Hierdurch bleibt stets genau ein Ausgang frei, so dass der Frischwasserstrom über diesen Ausgang geführt werden kann.

Außerdem ist es vorteilhaft, dass die Anzahl der Ventilschließkörper gleich 2 ist. Speziell können zwei Ventilschließkörper und drei Ausgänge vorgesehen sein. Hierdurch ergeben sich zum einen eine kompakte Ausgestaltung und ein zuverlässiges Schaltverhalten. Zum anderen können die schaltbaren Magnetspulen von zwei jeweils aktiven magnetischen Betätigungseinrichtungen hierdurch jeweils so angesteuert werden, dass sich die Magnetfelder der Magnetspulen gleichgerichtet verstärken. Die beiden Ventilschließkörper ordnen sich dann gewissermaßen auf den magnetischen Feldlinien an, die durch die beiden bestromten Magnetspulen definiert sind.

In vorteilhafter Weise sind die Ventilschließkörper als kugelförmige oder hohlkugelförmige Ventilschließkörper ausgestaltet. Durch eine hohlkugelförmige Ausgestaltung kann hierbei die Masse der Ventilschließkörper verringert werden, so dass das Ventil weniger abhängig von der Einbaulage ist.

Der Ventilschließkörper ist vorzugsweise kugelförmig, er könnte jedoch auch von der Kugelform ein wenig abweichen, z.B. eiförmig oder ein Ellipsoid sein. Es in jedem Fall von Vorteil, wenn sich der Ventilschließkörper in dem Ventilraum gut beweglich ist, vorzugsweise rollen kann, um sich an einen der Ausgänge zu bewegen. Der Durchmesser des Ventilschließkörpers sollte auf die Durchmesser der beiden Ausgänge (erster und zweiter Ausgang), welche sinnvollerweise denselben Durchmesser haben sollten, sinnvoll abgestimmt sein, d.h. einen größeren Durchmesser haben, damit er dichtend die Ausgänge verschließen kann. Um von der Betätigungseinrichtung bewegt werden zu können, ist es von Vorteil wenn der Ventilschließkörper entweder selbst magnetisch ist oder ein ferromagnetisches Material enthält. Ein ferromagnetisches Material ist ein Material, das von einem Magneten angezogen werden kann. Dieses Material kann z.B. aus Eisenspänen bestehen, die in dem Material des Ventilschließkörpers mit verarbeitet sind. Um eine verbesserte dichtende Wirkung zu erzielen, bietet es sich an, wenn der Ventilschließkörper aus einem weichelastischen Kunststoff gefertigt ist, beispielsweise Silikon oder dergleichen. Ein derartiger Kunststoff kann durch bekannte Gussverfahren in die gewünschte Form gebracht werden, und ein ferromagnetisches Material kann mit eingegossen werden. Es sind aber auch metallische ferromagnetische Ventilschließkörper denkbar. Ferner ist es vorteilhaft, dass der Ventilschließkörper eine auf zumindest einem Kunststoff basierende Schale aufweist. Hierdurch kann die Masse des Vehtilschließkörpers verringert werden. Außerdem kann durch eine aus Kunststoff gebildete Schale die Dichtwirkung des Ventilschließkörpers an dem jeweiligen Ausgang verbessert werden. Ferner kann hierdurch ein möglicher Verschleiß am Dichtsitz zwischen dem Ventilschließkörper und dem jeweiligen Ausgang vermieden werden.

In vorteilhafter Weist ist die Ventilkammer zumindest näherungsweise als zylindrische Ventilkammer ausgestaltet. Ferner ist es vorteilhaft, dass die Ausgänge hierbei paarweise und zumindest näherungsweise um den gleichen Azimutalwinkelabstand voneinander beabstandet angeordnet sind. Bei drei Ausgängen kann der Azimutalwinkelabstand dann beispielsweise 120° betragen.

Bevorzugte Ausführungsbeispiele der Erfindung sind in der nachfolgenden Beschreibung anhand der Figur der beigefügten Zeichnung näher erläutert. Es zeigt:

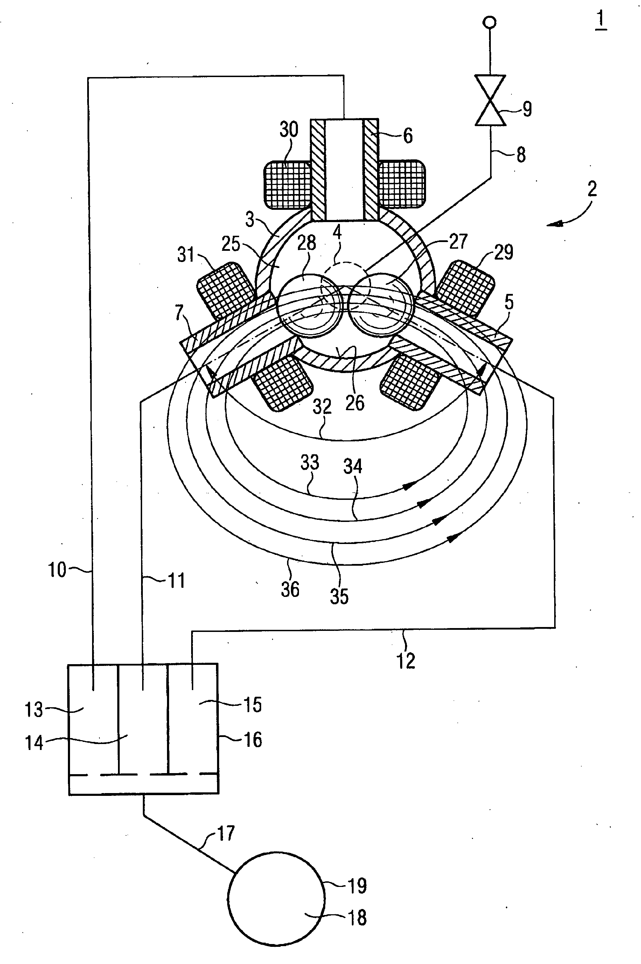

- Fig. 1: ein wasserführendes Haushaltsgerät mit einem Ventil in einer auszugsweisen, schematischen Schnittdarstellung entsprechend einem Ausführungsbeispiel.

Fig. 1 zeigt ein wasserführendes Haushaltsgerät 1 mit einem Ventil 2 in einer auszugsweisen, schematischen Schnittdarstellung entsprechend einem Ausführungsbeispiel. Das Haushaltsgerät 1 kann insbesondere als Wäschebehandlungsgerät ausgestaltet sein und zum Waschen und/oder Trocknen von Wäsche dienen. Speziell kann das Haushaltsgerät 1 als Waschmaschine oder Waschtrockner ausgestaltet sein. Das Ventil 2 eignet sich besonders für solch ein Haushaltsgerät 1. Das wasserführende Haushaltsgerät 1 der Erfindung und das Ventil 2 der Erfindung eignen sich allerdings auch für andere Anwendungsfälle.

Das Ventil 2 weist ein Gehäuse 3 auf, an dem ein Eingang 4, der durch eine unterbrochen dargestellte Linie veranschaulicht ist, und Ausgänge 5, 6, 7 vorgesehen sind. In diesem Ausführungsbeispiel ist genau ein Eingang 4 vorgesehen. Außerdem sind drei Ausgänge 5, 6, 7 vorgesehen.

Das Haushaltsgerät 1 weist eine Frischwasserleitung 8 auf, in der ein Sperrventil 9 angeordnet ist. Die Frischwasserleitung 8 ist hierbei mit dem Eingang 4 des Ventils 2 verbunden. Durch Öffnen des Sperrventils 9 kann Frischwasser zu dem Ventil 2 geführt werden.

Außerdem sind Verbindungsleitungen 10, 11, 12 vorgesehen, die einerseits mit den Ausgängen 5, 6, 7 verbunden sind und andererseits in Kammern 13, 14, 15 einer Einspülschale 16 des Haushaltsgeräts 1 münden. Wird über eine der Verbindungsleitungen 10, 11, 12 Frischwasser in die Einspülschale 16 geführt, dann kann beispielsweise ein in der jeweiligen Kammer 13, 14, 15 bevorratetes Behandlungsmittel, insbesondere ein Waschmittel, über einen Verbindungsstutzen 17 in einen Behandlungsbereich 18 geführt werden. Der Behandlungsbereich 18 ist in diesem Ausführungsbeispiel von einem Behälter 19 umschlossen, der insbesondere als Laugenbehälter 19 ausgestaltet sein kann. Über eine geeignete, nicht dargestellte Abpumpvorrichtung kann die verbrauchte Flüssigkeit, insbesondere die Lauge, aus dem Behälter 19 abgepumpt werden.

Das Ventil 2 ist so ausgestaltet, dass zuverlässig eine der Kammern 13, 14, 15 der Einspülschale 16 gespült werden kann. Hierbei kann je nach Ausgestaltung des Ventils 2 auf einen Mischer verzichtet werden.

In dem Gehäuse 3 des Ventils 2 list eine Ventilkammer 25 ausgestaltet, die von einer zumindest näherungsweise zylindermantelförmigen Wand 26 begrenzt ist. Die Ventilkammer 25 ist in diesem Ausführungsbeispiel zumindest nährungsweise zylindrisch ausgestaltet.

Das Ventil 2 weist außerdem Ventilschließkörper 27, 28 auf, die zusammen in der Ventilkammer 25 angeordnet sind. Hierbei ist die Anzahl der Ausgänge 5, 6, 7, die in diesem Ausführungsbeispiel gleich 3 ist, größer als die Anzahl der Ventilschließkörper 27, 28, die in diesem Ausführungsbeispiel gleich 2 ist. Speziell in diesem Ausführungsbeispiel ist somit die Anzahl der Ausgänge 5, 6, 7 um genau 1 größer als die Anzahl der Ventilschließkörper 27, 28.

Jedem Ausgang 5, 6, 7 des Ventils 2 ist eine magnetische Betätigungseinrichtung 29, 30, 31 zugeordnet. Hierbei sind zur Vereinfachung der Darstellung nur die schaltbaren Magnetspulen 29, 30, 31 der magnetischen Betätigungseinrichtungen 29, 30, 31 dargestellt. Je nach Ausgestaltung der magnetischen Betätigungseinrichtungen 29, 30, 31 können diese auch weitere Elemente und Bauteile umfassen.

Die Magnetspulen 29, 30, 31 umschließen die buchsenförmig ausgestalteten Ausgänge 5, 6, 7. Außerdem sind die Ausgänge 5, 6, 7 paarweise um den jeweils gleichen Azimutalwinkelabstand 32 voneinander beabstandet. In diesem Ausführungsbeispiel ist der Azimutalwinkelabstand 32 gleich 120°.

Die Ventilschließkörper 27, 28 sind als kugelförmige oder hohlkugelförmige Ventilschließkörper 27, 28 ausgestaltet. Durch eine hohlkugelförmige Ausgestaltung kann die Masse der Ventilschließkörper 27, 28 verringert werden, so dass speziell bei nicht waagrechten Einbaulagen des Ventils 2 der Einfluss der Schwerkraft auf die Funktionsweise des Ventils 2 verringert ist.

In der Fig. 1 ist eine Situation dargestellt, in der die magnetischen Betätigungseinrichtungen 29, 31 aktiviert sind, während die magnetische Betätigungseinrichtung 30 passiv ist. Hierbei werden die schaltbaren Magnetspulen 29, 31 bestromt. Die Bestromung der beiden Magnetspulen 29, 31 für die Ausgänge 5, 7 erfolgt hierbei so, dass sich die jeweils erzeugten Magnetfelder der Magnetspulen 29, 31 gleichgerichtet verstärken. Dies ist durch Feldlinien 33, 34, 35, 36 veranschaulicht. Die magnetischen Feldlinien 33 bis 36 verlaufen somit durch die buchsenförmigen Ausgänge 5, 7. Hierdurch ergibt sich eine magnetische Anziehungskraft auf die kugelförmigen Ventilschließkörper 27, 28. Die magnetischen Feldlinien 33 bis 36 laufen dann durch die Ventilschließkörper 27, 28, so dass sich die Ventilschließkörper 27, 28 zwischen den beiden Magnetspulen 29, 31 der Ausgänge 5, 7 befinden. Der Ausgang 6 bleibt hierbei frei und ist somit geöffnet.

Nach dem Aktivieren der magnetischen Betätigungseinrichtungen 29, 31 wird das Sperrventil 9 geöffnet, so dass das Frischwasser in die Ventilkammer 25 strömt. Hierdurch werden die Ventilschließkörper 27, 28 aufgrund des Wasserdrucks in ihren jeweiligen Dichtsitz an den Ausgängen 5, 7 gepresst. Das Frischwasser fließt dann über den offenen Ausgang 6. Somit ist die Verbindungsleitung 10 als Weg des Frischwassers gewählt, so dass die Kammer 13 der Einspülschale 16 gespült wird. Nachdem der Wasserdruck des Frischwassers die Ventilschließkörper 27, 28 an den Ausgängen 5, 7 hält, können die magnetischen Betätigungseinrichtungen 29, 31 auch deaktiviert werden. Dadurch verringert sich der Energieverbrauch. Dies hat den Vorteil, dass der Kupferanteil in den Magnetspulen 29 bis 31 reduziert werden kann, da die thermische Belastung verringert ist.

Somit kann durch Aktivieren der magnetischen Betätigungseinrichtungen 29, 31 an den Ausgängen 5, 7 der Ausgang 6 freigegeben werden, während die Ausgänge 5, 7 verschlossen sind. In entsprechender Weise kann somit jeder der Ausgänge 5, 6, 7 als offener Ausgang 5, 6, 7 gewählt werden, während jeweils die beiden anderen Ausgänge 5, 6, 7 durch die Ventilschließkörper 27, 28 verschlossen sind. Hierbei werden jeweils zwei der schaltbaren Magnetspulen 29 bis 31 auf die beschriebene Weise angesteuert.

Da die Magnetspulen 29, 30, 31 konzentrisch zu den Ausgängen 5, 6, 7 angeordnet sind, werden die erzeugten Magnetfelder beziehungsweise das sich durch Überlagerung ergebende Magnetfeld in Flucht mit den Auslässen 5, 6, 7 erzeugt. Die Ventilschließkörper 27, 28 können dann zwischen die beiden aktiven Magnetspulen 29, 30, 31 laufen.

### Bezugszeichenliste

- 1: Wasserführendes Haushaltsgerät
- 2: Ventil
- 3: Gehäuse
- 4: Eingang
- 5, 6, 7: Ausgang
- 8: Frischwasserleitung
- 9: Sperrventil
- 10, 11, 12: Verbindungsleitung
- 13, 14, 15: Kammer
- 16: Einspülschale
- 17: Verbindungsstutzen
- 18: Behandlungsbereich
- 19: Behälter
- 25: Ventilkammer
- 26: Wand
- 27, 28: Ventilschließkörper
- 29, 30, 31: magnetische Betätigungseinrichtung (schaltbare Magnetspulen)
- 32: Azimutalwinkelabstand
- 33 - 36: Feldlinien

## Patentansprüche

1. Ventil (2) mit zumindest einer Ventilkammer (25) und mehreren magnetischen Betätigungseinrichtungen (29, 30, 31), wobei ein Ventilschließkörper vorgesehen ist, der in der Ventilkammer (25) angeordnet ist, wobei die Ventilkammer (25) mehrere Ausgänge (5, 6, 7) aufweist und wobei die Anzahl der Ausgänge (5, 6, 7) größer ist als die Anzahl der Ventilschließkörper (27, 28), wobei
jedem Ausgang (5, 6, 7) eine der magnetischen Betätigungseinrichtungen (29, 30, 31) zugeordnet ist, **dadurch gekennzeichnet, dass** mehrere Ventilschließkörper (27,28) vorgesehen sind, die zusammen in der Ventilkammer (25) angeordnet sind, wobei die Anzahl der Ausgänge (5, 6, 7) um 1 größer ist als die Anzahl der Ventilschließkörper (27,28).

2. Ventil nach Anspruch 1, **dadurch gekennzeichnet, dass** die magnetischen Betätigungseinrichtungen (29, 30, 31) jeweils zumindest eine schaltbare Magnetspule (29, 30, 31) aufweisen.

3. Ventil nach Anspruch 2, **dadurch gekennzeichnet, dass** die Magnetspule (29, 30, 31) für einen zugeordneten Ausgang (5, 6, 7) den zugeordneten Ausgang (5, 6, 7) umschließt.

4. Ventil nach einem der Ansprüche 1 bis 3, **dadurch gekennzeichnet, dass** die Ventilschließkörper (27, 28) als kugelförmige oder hohlkugelförmige Ventilschließkörper (27, 28) ausgestaltet sind.

5. Ventil nach einem der Ansprüche 1 bis 4, **dadurch gekennzeichnet, dass** die Ventilkammer (25) zumindest näherungsweise als zylindrische Ventilkammer (25) ausgestaltet ist.

6. Ventil nach Anspruch 5, **dadurch gekennzeichnet, dass** die Ausgänge (5, 6, 7) paarweise um zumindest näherungsweise den gleichen Azimutalwinkelabstand (32) voneinander beabstandet sind.

7. Ventil nach einem der vorherigen Ansprüche, **dadurch gekennzeichnet, dass** die Anzahl der Ventilschließkörper (27, 28) gleich 2 ist.

8. Ventil nach Anspruch 7, **dadurch gekennzeichnet, dass** die schaltbaren Magnetspulen (29, 30, 31) der zwei jeweils aktiven magnetischen Betätigungseinrichtungen (29, 30, 31) jeweils so ansteuerbar sind, dass sich die Magnetfelder der Magnetspulen (29, 30, 31) der zwei aktiven magnetischen Betätigungseinrichtungen (29, 30, 31) gleichgerichtet verstärken.

9. Wasserführendes Haushaltsgerät (1) mit zumindest einem Ventil (2) nach einem der Ansprüche 1 bis 8.

## Claims

1. Valve (2) having at least one valve chamber (25) and a plurality of magnetic actuation devices (29, 30, 31), wherein a valve closing body is provided which is disposed in the valve chamber (25), wherein the valve chamber (25) has a plurality of outlets (5, 6, 7) and wherein the number of outlets (5, 6, 7) is greater than the number of valve closing bodies (27, 28), wherein each outlet (5, 6, 7) is assigned one of the magnetic actuation devices (29, 30, 31), **characterised in that** a plurality of valve closing bodies (27, 28) is provided, which are disposed together in the valve chamber (25), wherein the number of outlets (5, 6, 7) is greater by 1 than the number of valve closing bodies (27, 28).

2. Valve according to claim 1, **characterised in that** the magnetic actuation devices (29, 30, 31) each comprise at least one switchable magnet coil (29, 30, 31).

3. Valve according to claim 2, **characterised in that** the magnet coil (29, 30, 31) for an assigned outlet (5, 6, 7) encloses the assigned outlet (5, 6, 7).

4. Valve according to one of claims 1 to 3, **characterised in that** the valve closing bodies (27, 28) are embodied as spherical or hollow spherical valve closing bodies (27, 28).

5. Valve according to one of claims 1 to 4, **characterised in that** the valve chamber (25) is embodied at least approximately as a cylindrical valve chamber (25).

6. Valve according to claim 5, **characterised in that** the outlets (5, 6, 7) are distanced from one another in pairs by at least approximately the same azimuthal angle distance (32).

7. Valve according to one of the preceding claims, **characterised in that** the number of valve closing bodies (27, 28) is equal to 2.

8. Valve according to claim 7, **characterised in that** the switchable magnet coils (29, 30, 31) of the two respectively active magnetic actuation devices (29, 30, 31) can be actuated in each case such that the magnetic fields of the magnet coils (29, 30, 31) of the two active magnetic actuation devices (29, 30, 31) are amplified in a rectified manner.

9. Water-conducting household appliance (1) having at least one valve (2) according to one of claims 1 to 8.

## Revendications

1. Soupape (2) comprenant au moins une chambre de soupape (25) et plusieurs dispositifs d'actionnement magnétiques (29, 30, 31), un obturateur de soupape étant prévu, lequel est disposé dans la chambre de soupape (25), ladite chambre de soupape (25) comportant plusieurs sorties (5, 6, 7) et le nombre de sorties (5, 6, 7) étant supérieur au nombre d'obturateurs de soupape (27, 28), et à chaque sortie (5, 6, 7) étant associé un des dispositifs d'actionnement magnétiques (29, 30, 31), **caractérisée en ce que** plusieurs obturateurs de soupape (27, 28) sont prévus, lesquels sont disposés ensemble dans la chambre de soupape (25), le nombre de sorties (5, 6, 7) étant supérieur de 1 au nombre d'obturateurs de soupape (27, 28).

2. Soupape selon la revendication 1, **caractérisée en ce que** les dispositifs d'actionnement magnétiques (29, 30, 31) présentent chacun au moins une bobine magnétique commutable (29, 30, 31).

3. Soupape selon la revendication 2, **caractérisée en ce que** la bobine magnétique (29, 30, 31), pour une sortie associée (5, 6, 7), entoure ladite sortie associée (5, 6, 7).

4. Soupape selon l'une des revendications 1 à 3, **caractérisée en ce que** les obturateurs de soupape (27, 28) sont réalisés comme obturateurs de soupape (27, 28) en forme de sphère ou de sphère creuse.

5. Soupape selon l'une des revendications 1 à 4, **caractérisée en ce que** la chambre de soupape (25) est réalisée au moins approximativement comme chambre de soupape (25) cylindrique.

6. Soupape selon la revendication 5, **caractérisée en ce que** les sorties (5, 6, 7) sont espacées l'une de l'autre par paire au moins approximativement de la même distance angulaire azimutale (32).

7. Soupape selon l'une des revendications précédentes, **caractérisée en ce que** le nombre d'obturateurs de soupape (27, 28) est égal à 2.

8. Soupape selon la revendication 7, **caractérisée en ce que** les bobines magnétiques commutables (29, 30, 31) des deux dispositifs d'actionnement magnétiques (29, 30, 31) respectivement actifs peuvent être commandées chacune de telle manière que les champs magnétiques des bobines magnétiques (29, 30, 31) des deux dispositifs d'actionnement magnétiques actifs (29, 30, 31) sont amplifiés dans le même sens.

9. Appareil ménager à circulation d'eau (1) doté d'au moins une soupape (2) selon l'une des revendications 1 à 8.
